# EUROPEAN PATENT APPLICATION

(11) **EP 1 037 447 A2**
(43) Date of publication of application: **20.09.2000**
(21) Application number: 00302115.1
(22) Date of filing: 15.03.2000
(51) Int. Cl.: H04M 1/247, G06F 17/30

(54) **Method and system for utilizing subscriber status and location information in a wireless network**

(30) Priority: 16.03.1999 US 270389
(71) Applicant: Phone.Com Inc., Redwood City, CA 94063 (US)
(72) Inventor: Hitching, Sinclair H. Jr, Palo Alto, CA 94303 (US); Rossman, Alain S., Palo Alto, CA 94303 (US)
(74) Representative: Ablett, Graham Keith

(57) **Abstract**

A wireless communication system has a plurality of information server computers coupled by a wired network (100) and a plurality of wireless mobile devices (106,134,136) that communicate using a wireless network (102), each mobile device including a network browser, a display and a processor. A server (114) couples the mobile devices to the information server computers through the wireless network and the wired network. When a particular one of the network browsers desires to access a resource from one of the information server computers, the server determines whether a resource request therefrom is to an information server computers that provides spatial-related information and, if so, determines an appropriate location of interest and produces a revised resource request. The device (106) can therefore, for example, cause a display screen thereof (116) to display an identifier of at least one other wireless device and a status indicator pertaining thereto or the location thereof.

## Description

### BACKGROUND OF THE INVENTION

### 1. Field of the Invention

The present invention relates to wireless communications and, more particularly, to wireless communication systems utilizing subscriber status or location information.

### 2. Description of the Related Art

There are already several hundred million subscribers of wireless communication services throughout the world. With this proliferation of wireless communications, it is becoming more and more likely that parties will interact with one another in instances where the only means of communication for one or both parties is through wireless communications. The communications between the parties can be social or business related. Wireless communication is achieved when at least one party is making use of a wireless communication device and a wireless network. Wireless communication devices can, for example, include personal digital assistants (PDAs), two-way pagers, palm-sized computers and mobile phones.

Wireless carriers operate wireless networks that support wireless communications between parties. Wireless carriers, such as providers of cellular phone or pager services, typically have knowledge of whether their subscribers have their wireless communication device powered on (i.e., activated). Wireless carriers also tend to know the location of the wireless communication devices for its subscribers at least within its range of coverage. This activation information and location information can be used by wireless carriers in centrally managing calls to and from its subscribers (e.g., tracking position or automatic call redirection).

Cellular telephone service providers, as one type of wireless carrier, have for years been able to generate location information for mobile devices in a given cellular service area. The accuracy of this location information varies depending on the type of position determining technology used (e.g., Time Distance of Arrival (TDOA) based system or Global Positioning System (GPS)). The location information has been used to track mobile devices as they move within various cellular service areas. Location information has also been used in the past to automatically provide location information to emergency services or a designated contact, see U.S. Patent 5,835,907. However, as yet, such location information is not generally useable by subscribers of wireless communications services.

Often one or both the parties want to communicate with each other in real-time. Such real-time communications is offered by two-way interactive wireless devices such as mobile or cellular phones and two-way pagers (referred to as mobile devices hereafter). However, even when one or both parties have mobile devices, the real-time communications are available only when such parties have their mobile devices powered on. Hence, when one party calls another party on that party's mobile device, which is power off, the calling party is not able to reach the other party. Instead, the calling party will hear a message something to the effect of "the subscriber you have called is either out of range or has their phone off". In some cases, the calling party is simply passed to a voice mail system. In either case, the calling party is annoyed in having under gone an attempted call that is time consuming when the other party did not have their mobile device powered on.

Thus, there is a need for improved techniques to facilitate not only subscriber usage of location information but also more effective real-time wireless communications.

### SUMMARY OF THE INVENTION

The invention relates to improved techniques that facilitate usage of location information and/or device status information for wireless communication devices (also referred to as mobile devices). The invention includes various aspects. One aspect of the invention is that a mobile device is able to display location information pertaining to other mobile devices. Another aspect of the invention is that a mobile device is able to efficiently and effectively use location information relating to itself or another mobile device in accessing an information server having geographic based information. Still another aspect of the invention is that a mobile device is able to display device status information pertaining to other mobile devices. These aspects can be provided individually or in combination. In one embodiment, these aspects are beneficially applied to provide enhanced operation of mobile devices in a wireless communication system. As an example, these aspects are particularly useful for use with a bookmark feature present on some mobile devices.

The invention can be implemented in numerous ways, including as a method, an apparatus or device, a user interface, a computer readable medium, and a system. Several embodiments of the invention are discussed below.

As a mobile device, one embodiment of the invention includes a display screen, a client module including computer program code for causing the display screen to display (i) an identifier for each of at least one other mobile device and (ii) a status indicator pertaining to each of the at least one other mobile device, and a processor operatively connected to the display screen, the processor operates to execute the client module.

As a method for operating a mobile device having a display screen, one embodiment of the invention includes the operations of: receiving interface information, and producing a screen display on the display screen in accordance with the interface information. The screen display produced includes identifiers and a status indicators pertaining to the other mobile devices, the status indicators indicating whether the other mobile devices are active or inactive.

As a method for operating a mobile device having a display screen, one embodiment of the invention includes the operations of: receiving interface information, and producing a screen display on the display screen in accordance with the interface information. The screen display produced includes an identifier associated with a particular mobile device and location information pertaining to that particular mobile device. The location information indicates an approximate location of the particular mobile device. The particular mobile device is distinct from the mobile device on which the information is displayed.

As a user interface for a mobile device having a display screen and an input mechanism, one embodiment of the invention includes: a list of users from an address book associated with the mobile device, the users in the list are associated with other mobile devices; and a status indication for indicating an operational status of at least one of the other mobile devices associated with the users in the list. The list of users and their associated status indication are displayed on the display screen.

As a method for processing a Geographic Information System (GIS) request for spatially related data from a GIS server coupled to a network of computers, one embodiment of the invention performed in a server computer coupled to the network of computers include the operations of: receiving, at the server computer, a mobile device's request for access to a GIS server to obtain spatial data; obtaining, at the server computer, a location of interest that is associated with the mobile device's request for access to the GIS server; producing, at the server computer, a GIS server request based on the wireless device's request and the location obtained; and forwarding the GIS server request to the GIS server.

As a computer readable medium including computer program code for operating a mobile device having a display screen, one embodiment of the invention includes: computer program code for receiving interface information; and computer program code for producing a screen display on the display screen in accordance with the interface information, the screen display including an identifier for another mobile device and a status indicator pertaining to the another mobile device, the status indicator indicating whether the other device is active or inactive.

As a computer readable medium for operating a mobile device having a display screen, one embodiment of the invention includes: computer program code for receiving interface information; and computer program code for producing a screen display on the display screen in accordance with the interface information, the screen display including an identifier for a particular mobile device and location information pertaining to the particular mobile device, the location information indicating a location of the particular mobile device, and the particular mobile device being distinct from the mobile device performing the method.

As a wireless communication system, one embodiment of the invention includes: a plurality of information server computers coupled by a wired network; a plurality of mobile devices that communicate using a wireless network, each of the mobile devices including a network browser, a display and a processor; and a proxy server that couples the mobile devices to the information server computers through the wireless network and the wired network. When a particular one of the network browsers desires to access a resource from one of the information server computers of the wired network, a resource request is sent to the proxy server by the particular network browser. The proxy server then determines whether the resource request is to one of the information server computers that provides spatial-related information, and if so, the proxy server determines an appropriate location of interest and produces a revised resource request using the received resource request and the appropriate location.

As a method for providing information for a plurality of phone number identifiers on a display screen of a mobile device, one embodiment of the invention includes the operations of: requesting an address book containing the plurality of phone number identifiers corresponding to a user identifier associated with the mobile device; receiving a markup language file corresponding to the address book associated with the mobile device; caching the received markup language file in a memory of the mobile device; and displaying the plurality of phone number identifiers of the address book on the display screen together with activation status for the phone number identifiers and using the received markup language file.

The advantages of the invention are numerous. Different embodiments or implementations may yield one or more of the following advantages. One potential advantage of the invention is that users can be visually informed of status information pertaining to other mobile devices. Another potential advantage of the invention is that users can be visually informed of position or location information pertaining to other mobile devices. Still another potential advantage of the invention is that access to a GIS server is facilitated by location information (corresponding to a particular mobile device) obtained from a wireless carrier infrastructure or elsewhere. Yet another advantage of the invention is that an improved user interface (that provides additional information and functionality) is provided to users of mobile devices without imposing hardware or firmware changes to existing mobile devices.

Other aspects and advantages of the invention will become apparent from the following detailed description taken in conjunction with the accompanying drawings, which illustrate, by way of example, the principles of the invention.

### BRIEF DESCRIPTION OF THE DRAWINGS

The present invention will be readily understood by the following detailed description in conjunction with the accompanying drawings, wherein like reference numerals designate like structural elements, and in which:
FIG. 1 illustrates a block diagram of a wireless communication system according to one embodiment of the invention.
FIG. 2A is a block diagram of a block diagram of a proxy server device according to one embodiment of the invention.
FIG. 2B is a block diagram of a block diagram of a wireless client device according to an embodiment of the invention.
FIG. 2C is a block diagram of a Geographic Information System (GIS) server according to an embodiment of the present invention;
FIG. 3 is a diagram of a representative data structure for a user account;
FIG. 4 is a block diagram of a wireless communication system according to an embodiment of the invention.
FIG. 5 is a block diagram of a representative wireless carrier infrastructure;
FIG. 6A-6L illustrates a series of screen displays on a display screen according to one embodiment of the invention;
FIG. 7A is a flow diagram of client-side address book request processing according to one embodiment of the invention;
FIG. 7B is a flow diagram of gateway-side address book processing according to one embodiment of the invention;
FIG. 8 is a flow diagram of gateway-side address book processing according to another embodiment of the invention;
FIG. 9 is a flow diagram of gateway-side Geographic Information System (GIS) request processing according to one embodiment of the invention;
FIG. 10A is a flow diagram of additional GIS request processing performed at the GIS server according to one embodiment of the invention; and
FIG. 10B is a flow diagram of additional gateway processing according to one embodiment of the invention.

### DETAILED DESCRIPTION OF THE INVENTION

The invention relates to improved techniques that facilitate usage of location information and/or device status information for wireless communication devices (also referred to herein as mobile devices). The invention includes various aspects. One aspect of the invention is that a mobile device is able to display location information pertaining to other mobile devices. Another aspect of the invention is that a mobile device is able to efficiently and effectively use location information relating to itself or another mobile device in accessing an information server having geographic based information. Still another aspect of the invention is that a mobile device is able to display status information pertaining to other mobile devices. These aspects can be provided individually or in combination. In one embodiment, these aspects are beneficially applied to provide enhanced operation of mobile devices in a wireless communication system. As an example, these aspects are particularly useful for use with a bookmark feature present on some mobile devices.

The wireless communication devices, also referred to as mobile devices, include but are not limited to personal digital assistant (PDA) like portable devices, cellular phones, palm-sized computing devices or wireless capable remote controllers, and typically have much less computing resource than a desktop or laptop computer does. The mobile devices typically have a small display screen and a limited input mechanism (e.g., a phone keypad) for a user to interact with the server device to access mobile subscriber services. This is useful in maintaining the size, weight, power requirements, usability and mobility of the mobile devices.

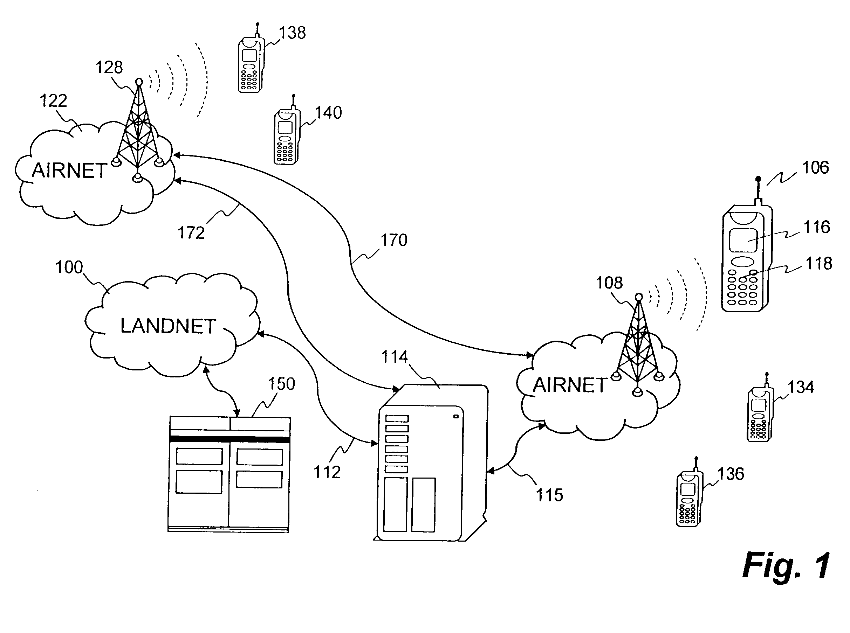

Embodiments of the invention are discussed below with reference to FIGs. 1-10B. However, those skilled in the art will readily appreciate that the detailed description given herein with respect to these figures is for explanatory purposes as the invention extends beyond these limited embodiments.

FIG. 1 illustrates a block diagram of a wireless communication system according to one embodiment of the invention. The wireless communication system includes a wired network (landnet) 100 and a wireless network (airnet) 102. Landnet 100 can represent the Internet, an intranet, or other data network. Airnet 102 can be any of a variety of types of wireless, for example, Cellular Digital Packet Data (CDPD), Global System for Mobile Communications (GSM), Code Division Multiple Access (CDMA) and Time Division Multiple Access (TDMA) networks, to name a few.

Proxy server device 114 is coupled between landnet 100 and airnet 102. Proxy server device 114 functions as a gateway server between landnet 100 and airnet 102. Since the communication protocol used in airnet 102 is often different from that used in landnet 100, one of the functions of proxy server device 114 is to translate from one communication protocol to another. One of ordinary skill in the art will appreciate that functions of proxy server device 114 may be performed by a server device acting as a direct gateway between airnet 102 and landnet 100.

A Geographic Information System (GIS) server 150 is also coupled to landnet 100. Geographic Information System (GIS) server 150 is a server computer that includes accessible information having a location or spatial context. In other words, Geographic Information System (GIS) server 150 is a system which provides access to large quantities of information linked by geographical or spatial information. Typically, Geographic Information System (GIS) server 150 contains applications which will allow the server to process spatial data derived from external sources and retrieve data on the basis of spatial or non-spatial queries.

A geographic information system (GIS) is a system for ordering, managing and accessing large quantities of information linked by geographical or spatial information. This information describes interactions, locations, associations, patterns and relationships that are characteristically spatial in nature. A Geographic Information System (GIS) server may contain static and dynamic information databases. Static information databases contain a relatively stable set of information that does not require frequent updates. For example, information relating to addresses and phone numbers is relatively static. Dynamic databases contain information that must be updated on a regular basis. For example, airline schedules tend to change with relatively little notice. To be able to manipulate and retrieve data in a geographic information system (GIS), it is often necessary to attach labels to groups of information, which may be placed in the same categories. These categories are hierarchically arranged so that the information can be accessed and handled at different levels of abstraction. For additional details on GIS, see Michael Bemers, "Fundamentals of Geographic Information Systems", John Wiley & Sons, ISDN 0471142840, December 1996.

Airnet 102 services a plurality of two-way wireless interactive communication devices, also referred to as mobile devices 106, 134, 136. For example, mobile device 106 (also referred to as the initiating wireless client device) is capable of communicating wirelessly with a wireless carrier infrastructure. Airnet 102 is coupled to proxy server device 114 through a network link 115. Proxy server device 114 is also coupled to landnet 100 through a network link 112. As an example, network links 112 and 115 can be over a leased line of public service telephone network (PSTN) or a private network. As a result, mobile device 106 can communicate to other wireless client devices through airnet 102 or to any server devices coupled to landnet 100 via proxy server device 114.

For simplicity, an antenna 108 represents the wireless carrier infrastructure associated with airnet 102. For example, the wireless carrier infrastructure generally includes a base station and an operations and maintenance centre. The base station controls radio or telecommunication links with the mobile devices serviced. The operations and maintenance centre typically includes a mobile switching centre that performs the switching of calls between the mobile devices and other fixed or mobile network users. Further, the operations and maintenance centre manages mobile services, such as authentication and oversees the proper operation and setup of the wireless network. The wireless carrier infrastructure also normally maintains user accounts for each of the mobile network users. Among other things, the user accounts contain type of services, geographic position, and device status.

The wireless communication system also includes an airnet 122 that services another plurality of wireless client devices, referred to as mobile devices 138 and 140. Airnet 122 has an antenna 128 that represents a wireless carrier infrastructure associated with the airnet 102. Airnet 122 is coupled to the airnet 102 through a network link 170. As an example, the network link 170 can be a land-based phone line of the PSTN. Airnet 122 is also coupled to proxy server device 114 through a network link 172. As an example, the network link 172 can be over a leased line of the PSTN or a private network.

According to one embodiment, the communication protocol used by Geographic Information System (GIS) server 150 is the well known HyperText Transfer Protocol (HTTP) or Secure HyperText Transfer Protocol (HTTPS), a secure version of HTTP, and runs on Transmission Control Protocol (TCP). The communication protocol between the wireless client device 106 and proxy server device 114 via airnet 102 is Handheld Device Transport Protocol (HDTP) (formerly known as Secure Uplink Gateway Protocol (SUGP)) or Wireless Access Protocol (WAP). Handheld Device Markup Language (HDML) and Wireless Markup Language (WML) are similar to Hyper Text Markup Language (HTML) in that they are tag based document languages (also known as markup languages). HDML and WML use a set of commands or statements specified in a group of cards (referred to as a deck) that specify how information is displayed on a display screen 116 of the wireless client device 106 and how mobile device 106 operates with respect to user interaction with the display screen 116. Normally, a number of cards are grouped into the deck and the deck is exchanged between the mobile device 106 and proxy server device 114. Further, it is to be understood by those of ordinary skill in the art that the invention may be practised by directly coupling airnet 102 to landnet 100 without using proxy server device 114. In effect, a server device contained within the framework of landnet 100 could perform the functions of proxy server device 114.

To facilitate the description of the present invention, the wireless communication protocol in use is assumed to be HDTP and the markup language in use is assumed to be HDML. One skilled in the art will appreciate that the invention can be practised using other communications protocols (e.g., Wireless Session Protocol (WSP))) and other markup languages (e.g., Compact Hypertext Markup Language (cHTML), Extensible Markup Language (XML) and Wireless Markup Language (WML)). It should be noted that HDTP is a session-level protocol that resembles HTTP but without incurring the overhead thereof and is highly optimized for use in thin devices, such as the mobile devices, that have significantly less computing power and memory than that do desktop personal computers. Exchanging a small number of packets during a transaction with a mobile device is one of the desired features for a wireless client device with limited computing power and memory.

According to one embodiment, mobile 106 includes a display screen 116 and a keypad 118 that allows a user thereof to communicate interactively with mobile device 106. Keypad 118 includes, in one embodiment, a typical phone keypad, a pair of generic buttons, and at least a pair of navigation (e.g., upward and downward arrow) buttons. The typical phone keypad includes twelve buttons, of which ten buttons are consecutively numbered 0 to 9, one button is for "*" sign, and another button is for "#" sign. Although not necessary for practising the invention, keypad 118 provides convenient and customary means for a user to interact with mobile 106. Further, it is to be understood by those of ordinary skill in the art that the invention may be practised using input interfaces (e.g., softkeys, iconic screens) other than a phone keypad.

Further, there is a working memory (ROM and RAM), not shown, in mobile device 106, compiled and linked processes of the present invention are typically stored in the working memory as a client module that causes mobile device 106 to operate with proxy server device 114. Upon activation of a predetermined key sequence utilizing keypad 118, for example, a microcontroller in mobile device 106 initiates a communication session request to proxy server device 114 using the client module in the working memory. Upon establishing the communication session, mobile device 106 typically receives a single HDML deck from proxy server device 114 and stores the deck as cached in the working memory. As described above, an HDML deck comprises one or more cards and each card includes the information required to generate a screen display on display screen 116. The number of cards in a card deck is selected to facilitate efficient use of the resources in mobile device 106 and airnet 102.

As previously stated, although the wireless communication system illustrated in FIG. 1 includes the proxy server device 114, it should be understood that the wireless communication system does not require a proxy server device be present. Instead, airnet 102 could be coupled to landnet 100 directly. This would allow the wireless client devices to more directly access information servers, such as the Geographic Information System (GIS) server 150.

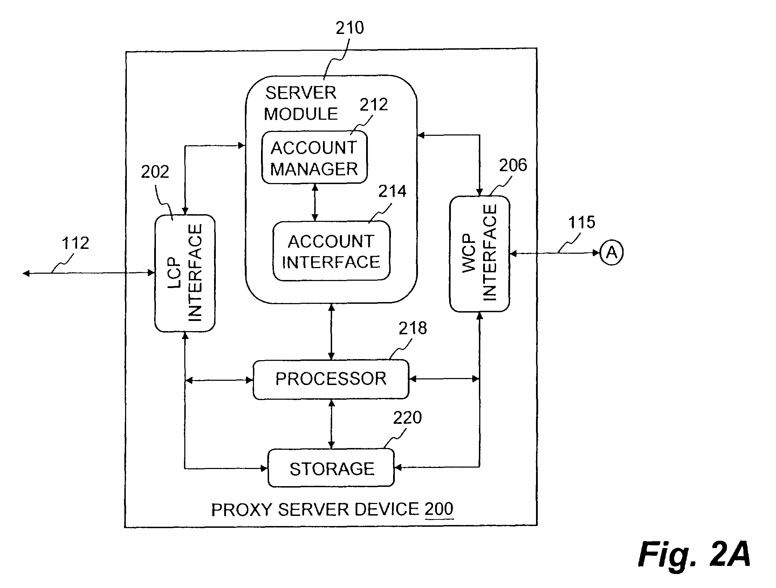

FIG. 2A is a block diagram of a proxy server device 200 according to one embodiment of the invention. Proxy server device 200 is, for example, proxy server device 114 of FIG. 1. Proxy server device 200 is coupled between landnet 100 and airnet 102 of FIG. 1. A network link 112 connects proxy server device 200 to landnet 100, and a network link 115 connects proxy server device 200 to airnet 102.

Proxy server device 200 is a server computer that operates as a network gateway between landnet 100 and airnet 102. To avoid obscuring the principle aspects of the present invention, well-known methods, procedures, components and circuitry in proxy server 200 are not described in detail.

Proxy server device 200 includes a Land Control Protocol (LCP) interface 202 that couples to the landnet 100, and a Wireless Control Protocol (WCP) interface 206 that couples to the airnet 102. A server module 210 is coupled between the LCP interface 202 and the WCP interface 206.

Server module 210 performs traditional server processing as well as protocol conversion processing from one communication protocol to another communication protocol. According to one embodiment, the protocol conversion processing can be implemented as a separate module referred to as a mapper. In the case of protocol conversion between HDTP and HTTP, the conversion is a straight data mapping relationship. It is understood to those skilled in the art that WCP interface 206 can be readily replaced by other interface module when airnet 102 uses other communication protocol, the same is true to LCP interface 202 when landnet 100 uses a different communication protocol.

Server module 210 also includes an account manager 212 and an account interface 214. Account manager 212 manages a plurality of user accounts for all the mobile devices serviced by the proxy server device 200. It is understood that the user accounts may be stored in another network server coupled to proxy server device 200. In other words, the user accounts can be kept in a database that is physically placed in any computing device coupled to the landnet (e.g. landnet 100 of FIG. 1).

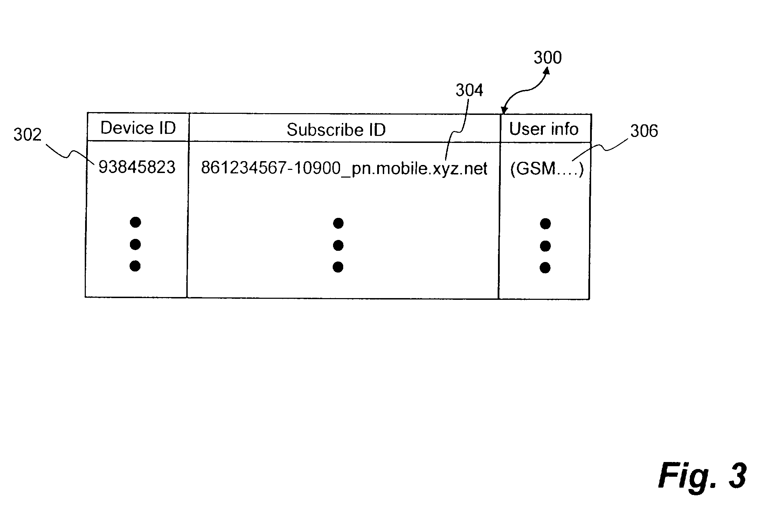

FIG. 3 is a diagram of a representative data structure 300 for a user account. As previously noted proxy server 200, which could be proxy server 114 of FIG.1, maintains user accounts for various users or subscribers. These user accounts are also known as subscriber accounts. The data structure 300 includes fields containing a device ID field 302, a subscriber ID field 304, and a user information field 306. The device ID field 302 includes a device ID, and the subscriber ID field 304 includes a subscriber ID. For example, in FIG. 3., the representative device ID is "93845823", and the representative subscriber ID is "861234567-10900_pn.mobile.xyz.net". The user information 306 can include account configuration information, user preferences, etc. For example, the account configuration information can indicate that the wireless client device is pre-configured for a GSM network but provided with an option to switch to a CDPD network if necessary. Further, the user information 306 can further contain or include pointers or linkages to other account related information, such as account index information and further detailed account information such as usage information, peak minutes, and recent call history. This account related information can be provided within the data structure 300 or remotely provided by another computer or storage device coupled to the landnet. The data structure is indexed by either the device ID 302 or the subscriber ID 304. Thus, when a request is made to retrieve specific information about a user account, either the device ID or the subscriber ID thereof must be provided.

Referring again to FIG. 2A, proxy server device 200 also includes a processor 218 and storage 220 as the primary hardware components. Processor 218 performs operations in accordance with server module 210. It should be understood to those skilled in the art that proxy server device 200 is a piece of hardware equipment that includes one or more processors (e.g., processor 218), working memory (e.g., storage 220), buses, interfaces and other components. On the other hand, server module 210 represents a software module, which contains processes (e.g., compiled and linked processes), loaded into the working memory to perform designated functions by proxy server device 200. The same distinction is equally applied to client modules within the wireless client devices.

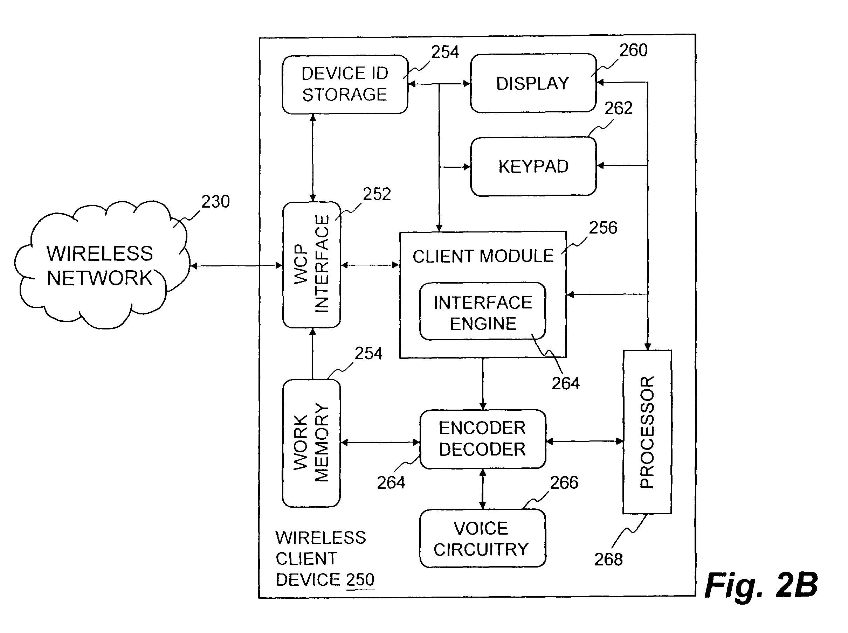

FIG. 2B is a block diagram of a block diagram of a mobile device 250 according to an embodiment of the invention. Mobile device 250 includes a WCP interface 252 that couples to wireless network 230 via a radio-frequency (RF) transceiver (not shown) to receive incoming and outgoing signals. A device identifier (ID) storage 254 supplies a device ID to the WCP interface 252.

The device ID identifies a specific code that is associated with the wireless client device 250. The device ID is used by proxy server device 200 to associate mobile device 250 with a user account provided in proxy server device 200. The device ID can be a phone number of the device or a combination of an IP address and a port number. An example of a combination of an IP address and a port number is 204.163.165.132:01905 where 204.163.165.132 is the IP address and 01905 is the port number. The device ID is further associated with a subscriber ID authorized by a wireless network carrier (and stored in the proxy server device 114, 200) as part of the procedures to activate a subscriber account for the mobile device 250. The subscriber ID may take the form of, for example, 861234567-10900_pn.mobile.att.net by AT&T Wireless Service, it is nevertheless a unique identification to mobile device 250. In other words, each of the wireless client devices serviced by proxy server device 200 has a unique device ID that corresponds to a respective user account in proxy server device 200.

Mobile device 250 also includes voice circuitry 266 (e.g., a speaker and a microphone) and the associated hardware (e.g., an encoder/decoder 264, a processor 268 and keypad circuitry 262) which provide a telephone mode of operation which is separate and distinct from a data mode of operation used when interfacing with proxy server device 200. In the telephone mode of operation, a user can cause mobile device 250 to place a phone call to another party having a phone, either wireless or land-based.

In addition, mobile device 250 includes a client module 256 with an interface engine 264 which works in conjunction with the processor 268 and the working memory 254 to perform the processing tasks performed by the mobile device 250 including establishing a communication session with proxy server device 200 via the airnet (e.g. 102 of FIG. 1), requesting and receiving data via the airnet, displaying information on a display screen through the use of display circuitry 260, and receiving user input from a user via a keypad controlled by keypad circuit 262. Additionally, client module 256 operates, among other things, a browser, commonly referred to as micro-browser, which requires much less computing power and memory than well-known HTML browsers do. The micro-browser is, preferably, a HDML micro-browser. One such micro-browser is, for example, available from Unwired Planet, Inc. located at 800 Chesapeake Drive, Redwood City, CA 94063. Additional details on accessing a (proxy) server device from a mobile device using a (micro) browser are described in U.S. Patent 5,809,415, which is hereby incorporated by reference.

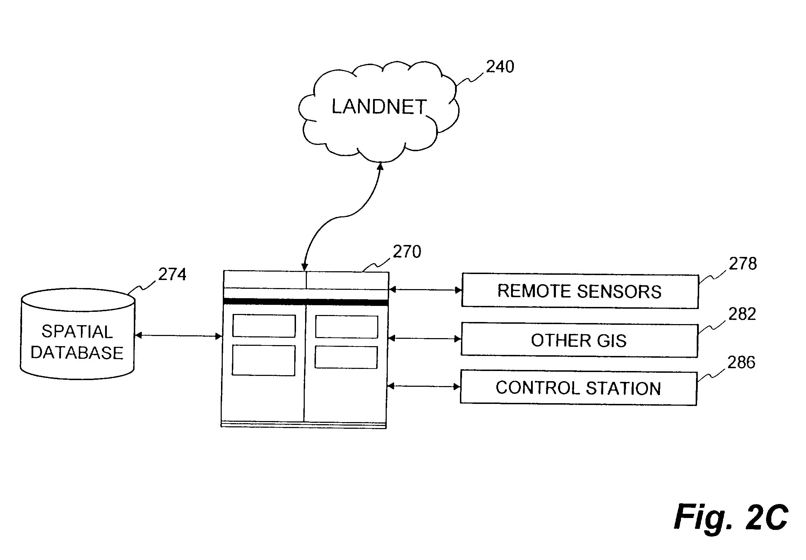

FIG. 2C is a block diagram of a Geographic Information System (GIS) server 270 according to an embodiment of the present invention. GIS server 270 couples to a landnet 240. GIS server 270 is, for example, suitable for use as the GIS server 150 illustrated in FIG. 1. Landnet 240 also represents landnet 100 illustrated in FIG. 1. Landnet 240 may be the Internet, an intranet or some private network.

GIS server 270 is a server computer that includes accessible information having a location or spatial context. GIS server 270 contains processes, which will allow the server to process spatial data, derived from external sources and retrieve data on the basis of spatial queries. The spatial data is typically information linked by geographical or spatial information. The spatial data is stored in a spatial database 274 that is internal to GIS server 270 or coupled thereto. In one embodiment, the GIS server 270 operates as an HTTP server.

According to one embodiment, GIS server 270 is coupled to remote sensors 278, other GISs 282 and a control station 286. The remote sensors 278 can be used to provide spatial data to GIS server 270 or spatial database 274. Control station 286 can control the acquisition and update of the spatial data for GIS server 270 or the spatial database 274. The other GISs 282 can be linked with GIS server 270 for exchange of data.

As discussed further below, according to one aspect of the invention, location information for a monitored wireless client device can be supplied in an appropriate form to a GIS server together with a request for information from the GIS server associated with the location information for the monitored wireless client device. The monitored wireless client device can be the requesting wireless client device or another wireless client device of interest.

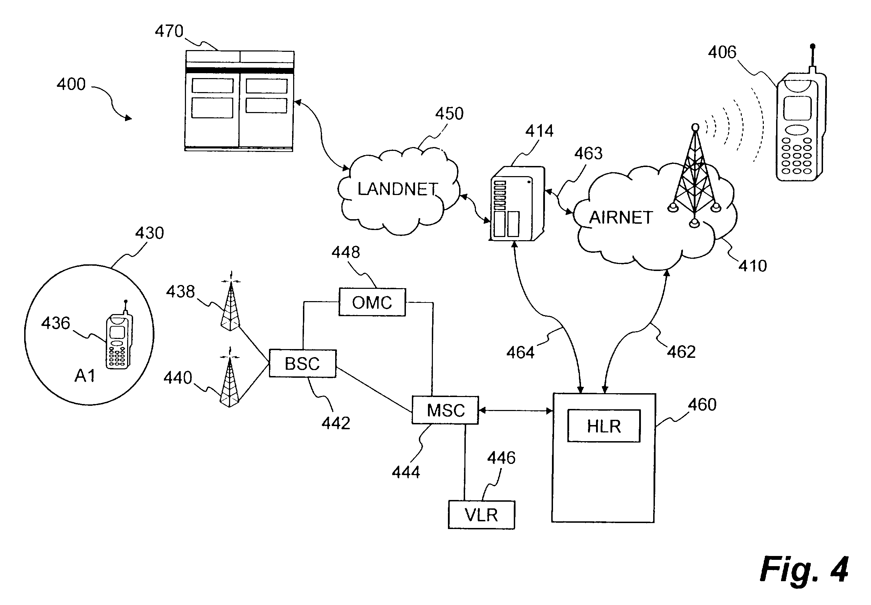

FIG. 4 is a block diagram of a wireless communication system 400 according to an embodiment of the invention. The wireless communication system 400 includes a mobile device 406 that couples to a landnet 450 through an airnet 410 and a proxy server device 414. An information server 470 is coupled to the landnet 450. According to an exemplary embodiment of the invention, the information server 470 is a Geographic Information System (GIS) server.

According to one embodiment of the invention, proxy server device 414 maintains an address book for each subscriber, namely for the user (subscriber) of mobile device 406. The address book for mobile device 406 is stored with the user account for mobile device 406 on proxy server device 414. The address book contains identifiers and phone numbers of parties of interest to the user of wireless client device 406. Wireless communication system 400 also illustrated a representative remote mobile device 436 that is associated with one of the phone numbers contained in the address book for the mobile device 406.

As shown in FIG. 4, remote mobile device 436 is known by the wireless communication system 400 to be located near location "A1" within a geographic area 430. At predetermined intervals or when mobile device 406 accesses its address book, remote mobile device 436 is polled to determine its activation status and position (location). This polling process is conducted under the control of a Mobile Switching Centre (MSC) 444, which stores the responses in a Visitor Location Register (VLR) 446. VLR 446 updates the Home Location Register (HLR) 460 upon request. The obtained activation status and position information can be passed to proxy server device 414 which then forwards the information to mobile device 406 in the manner previously described. The methodology used to determine the location or geographic position of remote mobile device 436 may be Time Distance of Arrival (TDOA), GPS or other known location methodologies.

The subject mobile devices (e.g., personal digital assistants (PDAs), cellular phones, or other wireless capable devices with small display screens) are known to use their reverse control channels for various functions, including registration, call origination and call reception. Registration, for example, occurs when the wireless client device is turned-on, turned-off, and every 10 to 15 minutes while the device is powered-on but not in use. During registration, remote mobile device 436 and an airnet (wireless network) providing service to remote mobile device 436 exchange information. If TDOA is used to determine location, the responses from remote mobile device 436 are received at base transceiver stations 438 and 440 of the airnet. By comparing the difference in the time of arrival of the responses from remote device 436 at the different base transceiver stations 438 and 440, the position of remote mobile device 436 can be determined using a hyperbola matching method (or similar methodologies). Further, it is to be understood by those of ordinary skill in the art that the present invention may be practised using any wireless device location methodology, including GPS where the wireless client devices include a GPS receiver or Loran-C.

When proxy server device 414 receives the updated activation status and position information, the user accounts referencing the associated wireless client device 436 are then updated. As needed, the activation status and/or position information can be retrieved from the user account and forwarded to mobile device 406. The activation status information can assist a user of mobile device 406 is determining whether the user of remote mobile device 436 is likely available to receive a call. Additionally, the position information can be used to access Geographic Information System (GIS) server 470 and retrieve GIS information. For example, the retrieved GIS information can be used by the mobile device 406 but relate to the location of the remote mobile device 436 (which is identified in the address book for the wireless client device 406). As another example, the position information can pertain to the users own wireless client device and then used to access the Geographic Information System (GIS) server 470 and retrieve GIS information.

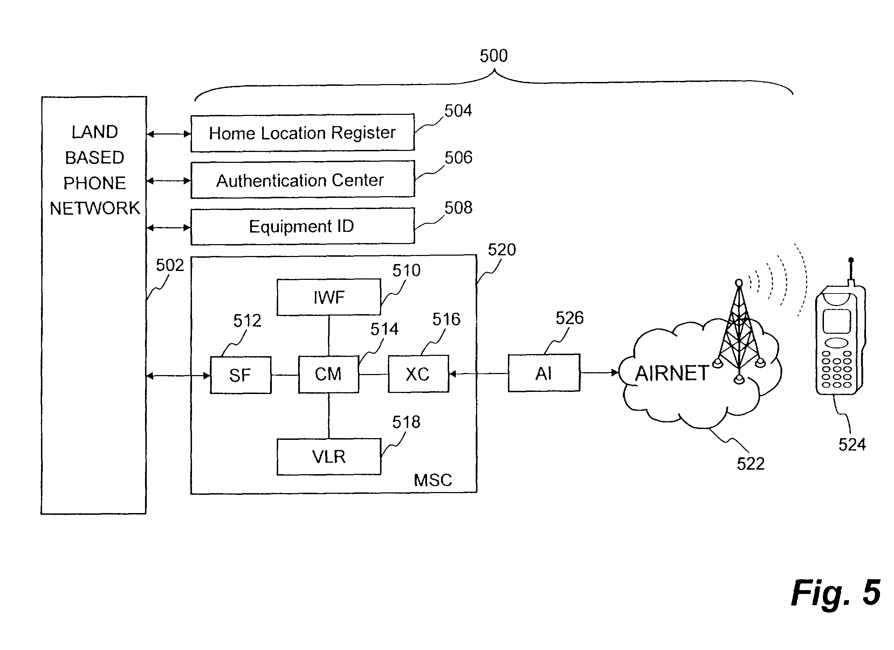

FIG. 5 is a block diagram of a representative wireless carrier infrastructure 500. Wireless carrier infrastructure 500 includes an airnet 522, which further includes a Base Station System (BSS). The BSS includes a base transceiver station (BTS) and a Base Station Controller (BTS). The BSS controls the transmission and reception activities and is connected to a Mobile Switching Centre (MSC) 520 through an air interface (Al) 526. MSC 520 is also known as a Network Switching Station (NSS). MSC 520 includes a connection management unit (CM) 514 that coordinates the transfer of information between airnet 522 and a land based phone network 502. MSC 520 also includes an interworking function unit (IWF) 510 for translation between wireless protocols, a standard function (SF) 512 for translation between wireless and land-based protocols, a MSC connector (XC) 516 to couple MSC 520 to the air interface (Al) 526, and a Visitor Location Register (VLR) 518. VLR 518 is a database that supports subscribers resident in an area supported by a particular MSC. The information present in VLR 518 includes, for example, the subscriber ID and billing/usage information. The functions performed by MSC 520 can include the following: paging, call set up coordination, location registration, interworking function with different networks, handover management, and most importantly billing for all subscribers based in its area.

The wireless carrier infrastructure 500 also has access to three information sources, more specifically, a Home Location Register (HLR) 504, an Authentication Centre (AUC) 506, and an Equipment identity register (EIR) 508. HLR 504 is a centralized database that contains information relating to the subscriber accounts regardless of location. HLR 504 supplies the VLR 518 with information when a new subscriber enters an area of local coverage. AUC 506 stores information to protect communications through air interface 526 against unauthorized intrusions. EIR 508 is a database that stores the equipment identification numbers for all the registered wireless client devices (e.g., wireless client device 524). Each of the above described system components and processes are known to those skilled in the art and need not be described in detail herein to avoid unnecessarily obscuring aspects of the invention.

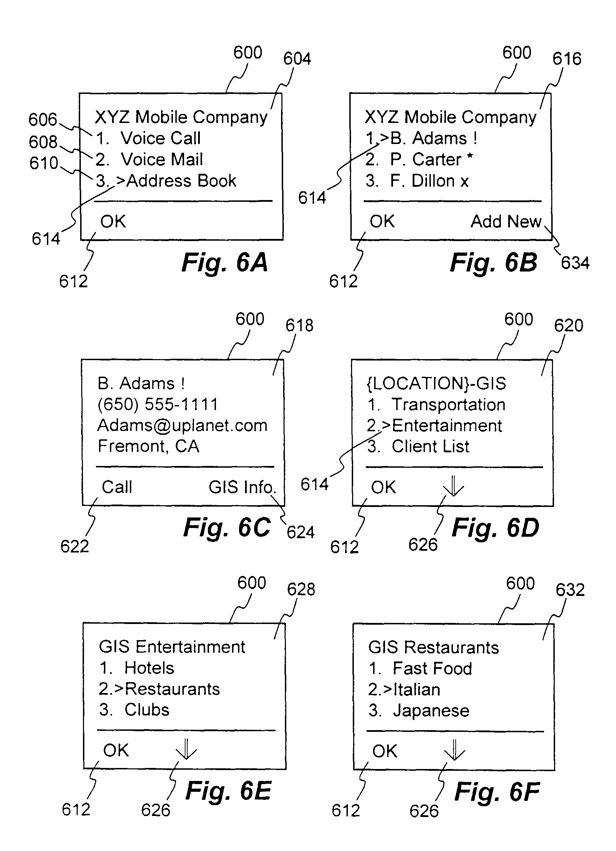

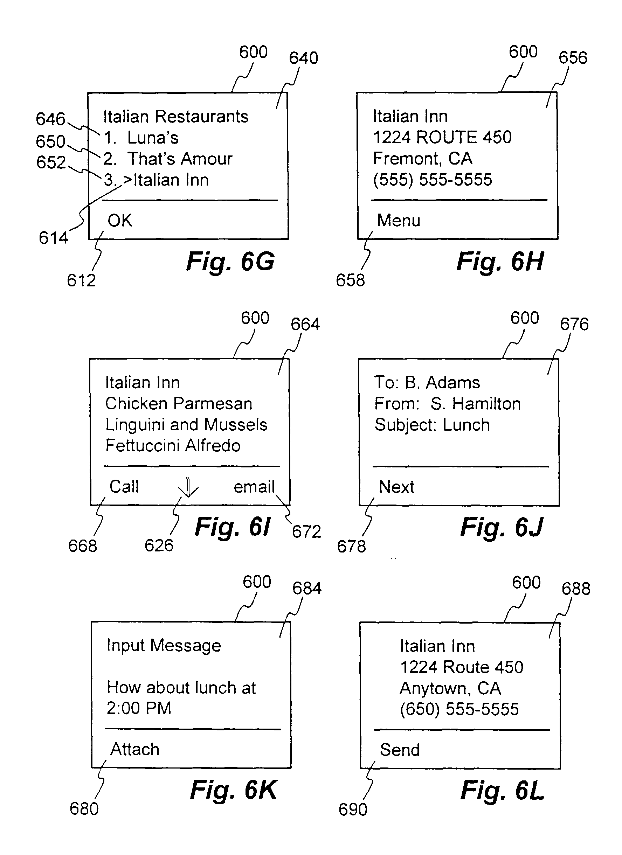

FIG. 6A-6L illustrates a series of screen displays on a display screen 600 according to one embodiment of the invention. The display screen 600 is representative of a small size screen typically provided on mobile devices, such as display screen 116 of mobile device 106 illustrated in FIG. 1.

When the mobile device (106 of FIG. 1 ) is turned on, an initial screen display 604 is displayed on display screen 600. A softkey 612 is generally associated with a generic button on the keypad of mobile device in question. Here, the softkey 612 represents an "OK" operation that is activated when the associated generic button is selected. As described above, a softkey provides a mechanism to map a generic button into a specific operation, namely pressing the generic button is equivalent to pressing a button that requests the specific operation. However, the invention is independent of how a user makes selections on the mobile, whether by buttons, touch screen-inputs, or other user-input means.

FIG. 6A illustrates an initial screen display 604 that presents a user with three service options. The three service options include: Voice Call 606, Voice Mail 608, and an Address Book 610. The Address Book 610 service option is shown as being selected by a selection indicator 614. A user can select a different service option by vertically scrolling the selection indicator 614 up or down. A variety of methods can be used to move selection indicator 614 up or down on screen display 604. Those skilled in the art can implement the invention with any desired mechanism for moving element indicator 614. In one embodiment, initial screen display 604 can be controlled by one card in a deck of cards stored in the working memory of the portable wireless device. As shown in FIG. 6A, upon selection of the generic button, the "OK" operation is activated to cause the Address Book service to be initiated.

FIG. 6B illustrates a screen display 616 that results when the Address Book service is requested. Screen display 616 includes a list of persons and their associated device statuses. More particularly, screen display 616 contains a list of name identifiers and status identifiers for three persons. The three name identifiers are "B. Adams", "P. Carter", and "F. Dillon". The status identifiers are "!" and "*" for "B. Adams" and "P. Carter", respectively. The name identifier for "F. Dillon" does not have a status identifier shown because the status of the associated remote mobile device is not known. The name identifier operates as a label that is associated with a particular phone number (or remote mobile device) of interest. The status identifier indicates whether the remote mobile device corresponding to the name identifier is active, not active or has an unknown status. A remote mobile device is active if it is able to receive calls. In the case of a cellular phone, active means that the cellular phone is turned on and within range of a supporting wireless network carrier. On the other hand, inactive may mean that the cellular phone is either turned off or out of range.

In FIG. 6B, the status identifier ("!") indicates that the phone device associated with the name identifier ("B. Adams") is currently active. Due to various network and system delays, the status identifiers are actually estimates of the status of the associated phone devices. Hence, the status identifier ("!") can indicate that the remote mobile device is possibly active because the last status information for the phone device shows the remote mobile device as being active. Also, in FiG. 6B, the status identifier ("*") indicates that the device associated with the name identifier ("P. Carter") is currently inactive. Again, due to various network and system delays, the status identifiers are actually estimates of the status of the associated phone devices. Hence, the status identifier ("*") can indicate that the phone device is possibly inactive because the last status information for the phone device shows the phone device as being inactive. Alternatively, the status indicators could indicate whether the phone device is in use, out of range and turned on as separate status indicators. Also, in the case where the monitored status information is unknown, such an indication could be displayed. Additionally, the status identifier or an additional identifier or symbol can be provided to indicate whether the phone number associated with the remote device corresponding to a name identifier is for a land-based phone or a wireless phone. Additional identifiers such as "#" could be provided for land-based phone.

While the indicators "!" and "*" have been described and illustrated with respect to FIG. 6B, many other types of indicators can be utilized. The indicators need only serve to indicate the status of a certain other mobile devices. Other indicators, symbols, alphanumeric characters, icons, or other visually distinct objects may be used to indicate the status of remote devices without deviating from the invention.

Screen display 616 has softkey 612 associated with a first generic button and another softkey 634 associated with a second generic button. Softkey 612 represents an "OK" operation that is activated when the first generic button is selected. Softkey 634 represents a "Add New" operation that is activated when the second generic button is selected. In the exemplary embodiment, the "Add New" operations provides a user interface via a card deck to enable a user to add new persons in their Address Book.

Pressing the generic button associated with softkey 612 while the selection indicator 614 is aligned with name identifier "B. Adams" entry (i.e., choice 1), causes screen display 600 to change to screen display 618 as shown in FIG. 6C. Screen display 618 displays more information about the selected entry (i.e., choice 1). The information displayed in screen display 618 includes the name identifier ("B Adams"), the status identifier ("!"), the associated phone number ((650) 555-1212), an email address (adams@uplanet.com), and a location information (Fremont, CA). The location information can be an street address, a locality name (e.g., city, town, county, etc.), an absolute location (e.g., latitude and longitude), or any similar nomenclature for indicating location. The location information is with respect to the selected entry.

The screen display 618 has two softkeys 622 and 624. Softkey 622 represents a "Call" operation that is activated when a first generic button is selected, and the softkey 624 represents a "GIS Info." operation that is activated when a second generic button is selected. The "Call" operation initiates a call to an associated phone number. The "GIS Info." operation initiates a query or request to a Geographic Information System (GIS) server for GIS information relating to the location of the displayed entry. In this exemplary screen display 618, the "GIS Info." would relate to the location of the phone device registered to the displayed name identifier "B. Adams". In one embodiment, the GIS information can be forwarded to the requesting mobile device as a GIS deck that provides a user interface to the requestor's mobile device for viewing and navigating the GIS information.

Screen display 618 has softkey 624 that is associated with a generic button. Pressing the generic button associated with softkey 624, causes a request to a GIS server to be initiated from the requestor's mobile device. The request provides the GIS server with location information for a remote mobile device of interest. The location information identifies the location of interest (i.e., the location of the mobile device associated with "B. Adams"). Once the requestor's mobile device receives a response from the GIS server, display screen 600 changes to a screen display 620 as shown in FIG. 6D. Screen display 620 provides a user interface that facilities user navigation through the GIS information.

Screen display 620 includes a list of information categories associated with the GIS information. In the exemplary screen display 620 shown in FIG. 6D, there are three information categories listed: 1) Transportation; 2) Entertainment; and 3) Client List. The "Transportation" category contains transportation related information such as information on bus schedules, phone numbers for taxi services, traffic reports, and similar information. The "Entertainment" category contains entertainment-related information such as information on hotels, restaurants and clubs. The "Client" category contains client-related information. Regardless of the category, the information presented relates to the location of interest (i.e., the location of the phone device of "B. Adams"). A downward pointing arrow 626 of the screen display 620 indicates that additional categories are available and may be displayed by scrolling downward.

The elements of the list generally represent a logical grouping of the available GIS information. In one embodiment, the entries in the list are links or URLs to particular portions of the GIS information. The links or URLs could cause retrieval of information from the memory of the phone device or additional requests for additional GIS information. In one embodiment, the response from the GIS server is provided to the requestor's portable wireless device as a deck of cards.

Pressing the generic button associated with softkey 612 of screen display 620 while the selection indicator 614 is aligned with the "Entertainment" category (i.e., choice 2), causes display screen 600 to change to screen display 628 as shown in FIG. 6E. Screen display 628 displays a list of available categories of information relating to entertainment. In the exemplary screen display 628 shown in FIG. 6E, the available entertainment categories are as follows: 1) Hotels; 2) Restaurants; and 3) Clubs. The downward pointing arrow 626 indicates that additional entertainment categories are available and may be displayed by scrolling downward.

Screen display 628 has softkey 612 that is associated with a generic button. By pressing the generic button associated with softkey 612 while the element indicator 614 is aligned with "Restaurants" (i.e., choice 2), the display screen 600 changes to screen display 632 as shown in FIG. 6F. Screen display 632 illustrates available categories of restaurants. Since screen display 632 pertains to GIS information, the categories of restaurants are those types of restaurants in the vicinity of the location of interest (i.e., the location of the phone device of "B. Adams"). In the exemplary screen display 632, the available types of restaurants includes: 1) Fast Food; 2) Italian; and 3) Japanese.

Screen display 632 has the softkey 612 that is associated with a generic button. Pressing the generic button associated with softkey 612 while the element indicator 614 is aligned with "Italian" (i.e., choice 2), causes display screen 600 to change to display screen 640 as shown in FIG. 6G. Display screen 640 lists the names of restaurants in the vicinity of the location of interest. In the exemplary display screen 640 provided in FIG. 6G, the names of restaurants in the vicinity of the location of interest are as follows: 1) Luna's; 2) That's Amour; and 3) Italian Inn. The screen display 640 has the softkey 612 associated with a generic button.

Pressing the generic button associated with softkey 612 while element indicator 614 is aligned with the "Italian Inn" (i.e., choice 3), causes the display screen 600 to change to screen display 656 as shown in FIG. 6H. Screen display 656 displays the phone number and address for the Italian Inn. Screen display 656 includes the softkey 612 and a softkey 660. The softkey 612 represents an "Back" operation that is activated when a first generic button is selected, and the softkey 660 represents a "Menu" operation that is activated when a second generic button is selected. A "Back" operation returns to a prior screen and is often provided in the display screens although only shown in screen display 656.

Pressing the generic button associated with softkey 660 causes the display screen 600 to change to screen display 664 as shown in FIG. 61. Screen display 664 displays a menu for the Italian Inn. The screen display 664 also has the downward pointing arrow 626 indicating availability of additional menu information by downward scrolling, and softkeys 668 and 672. The softkey 668 represents a "Call" operation that is activated when a first generic button is selected, and the softkey 672 represents a "email" operation that is activated when a second generic button is selected. The "Call" operation causes a phone call to be placed to the phone device registered to the previously displayed name identifier "B. Adams". The "email" operation causes an email message to be created for the previously displayed name identifier "B. Adams".

Pressing the generic button associated with softkey 672, causes the display screen 600 to change to screen display 676 as shown in FIG. 6J. Screen display 676 includes "To", "From" and "Subject" fields for the email message. The data for these fields can be typed in by the user. However, the "To" and "From" fields can normally be automatically populated using information in the Address Book. Screen display 676 is cached or stored in the wireless client device. The "Subject:" field is input using the interface of the wireless client device. Screen display 676 has a softkey 678. The softkey 678 represents a "Next" operation that is activated when a generic button is selected.

Pressing the generic button associated with softkey 678, causes display screen 600 to change to screen display 684 as shown in FIG. 6K. Screen display 684 provides an "Input Message" field for the email message and permits the user to type in a message. Screen display 684 has a softkey 680. Softkey 680 represents an "Attach" operation that is activated when a generic button is selected. The "Attach" operation operates to attach the name and address of the selected restaurant to the email message so that the recipient can where the lunch meeting is to occur. By pressing the generic button associated with softkey 680, not only is the attachment operation performed but also the display screen 600 changes to a display screen 688 which illustrates the attachment as shown in FIG. 6L. The screen display 688 has a softkey 690. The softkey 690 represents a "Send" operation that is activated when a generic button is selected. By pressing the generic button associated with softkey 690, an email message is sent. Thereafter, the display screen 600 can return to an upper level display screen, such as the screen display 604 shown in FIG. 6A.

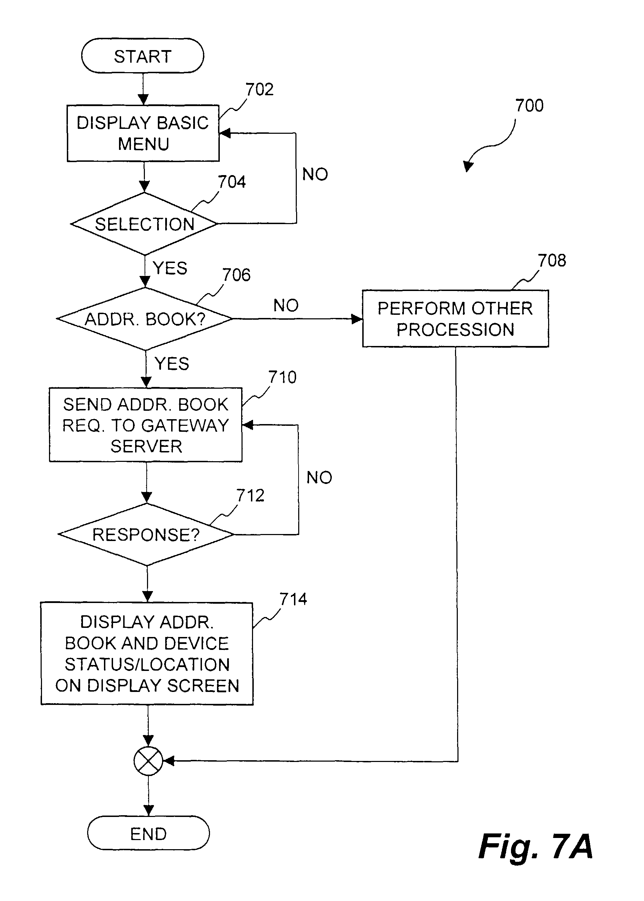

FIG. 7A is a flow diagram of client-side address book request processing 700 according to one embodiment of the invention. The client-side address book request processing 700 is, for example, performed by the mobile device (e.g. 106 of FIG. 1).

The client-side address book request processing 700 begins by initially displaying a basic menu at block 702. The basic menu, for example, includes available operations on the wireless client device that a user may select. As an example, the basic menu can include a voice call selection, a voice mail selection and an address book selection. An exemplary basic menu is shown in screen display 1102 of FIG. 11. Next, in block 704, the client-side address book request processing 700 determines whether a selection of one of the listed menu items has been made. When a selection has not yet been made, the client-side address book request processing 700 awaits such a selection. Once a selection has been made, a decision block 706 determines whether the selection has requested an address book. Typically, the wireless client device has an address book feature in which a user can utilize to store and subsequently retrieve contact information such as names, telephone numbers, facsimile numbers and addresses for various contacts (e.g., individuals). When the decision block 706 determines that the address book feature has not been selected, then other processing is performed at block 708 to carry out the user's selection. The other processing at block 706 can, for example, correspond to the other available operations on the wireless client device that the user can select (e.g., voice call, voice mail, etc.).

On the other hand, when the decision block 706 determines that the address book feature has been selected, then an address book request is sent to a gateway server at block 710. The gateway server is, for example, the proxy server device 114 illustrated in FIG. 1. Here, the wireless client device operates to send an address book request through a wireless network (e.g., airnet) to a gateway server. Then, a decision block 712 determines whether a response has been received from the gateway server. If no response has been received, the client-side address book request processing 700 awaits such a response. Once the decision block 712 determines that the response has been received, an address book and an associated device status and/or device location are displayed on a display screen associated with the wireless client device at block 714. Here, in addition to displaying entries of an address book as is well known in the art, the client-side address book request processing also displays either associated device status information or device location information, or both. The device status information can indicate whether or not the wireless client devices associated with the entries in the address book are active (or at least have recently been active). Such status information is useful for the user of the wireless client device who is desirous of communicating with one or more of the individuals listed within the address book. Hence, upon seeing that a particular individual's wireless client device is currently active, the user of the wireless client device can request to telephone that individual knowing that they will likely answer the call. On the other hand, when an individual in the address book is shown as having their wireless client device inactive, then a telephone call would not be fruitful if direct communication with the individual is desired. The device location information is useful in a variety of ways. For example, the device location information can be displayed to the user of the wireless client device so that the user is able to determine the location (current or last known) for the individual of interest. Following block 714, as well as following block 708, the client-side address book request processing 700 is complete and ends.

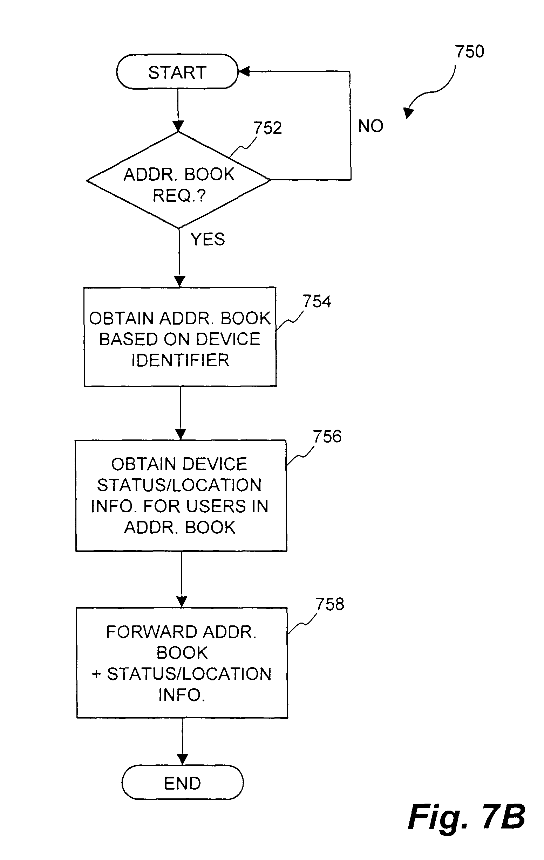

FIG. 7B is a flow diagram of gateway-side address book processing 750 according to one embodiment of the invention. The gateway-side address book processing 750 is, for example, performed by proxy server device 114 illustrated in FIG. 1. The gateway-side address book processing 750 also represents server-side processing as a counterpart to the client-side address book request processing 700 illustrated in FIG. 7A.

The gateway-side address book processing 750 initially begins with a decision block 752 that determines whether an address book request has been received. When the decision block 752 determines that an address book request has not yet been received, the gateway-side address book processing 750 awaits the reception of such a request. Once the decision block 752 determines that an address book request has been received, then an address book is obtained based on a device identifier at block 754. Here, the address book request arriving at the gateway server includes a device identifier for the wireless client device that has issued the address book request. The gateway server stores various address books (or has access thereto) for the various wireless client devices that the gateway server supports. For example, the user information field 306 of the user account 300 illustrated in FIG. 3 can contain, or include a pointer to, the appropriate address book. Hence, by using the device identifier, the gateway server is able to obtain the appropriate address book for use with the wireless client device.

Next, device status and/or device location information is obtained at block 756 for each of the users within the address book. Here, the address book includes entries pertaining to users or individuals that have been identified as being of interest to the owner of the address book (and user of the wireless client device). According to the invention, when an address book is requested, the requestor will receive not only the address book but also the device status and/or device location information for each of the users within the address book. As an example, the device status information can indicate whether the wireless client devices for the users or individuals within the address book are activate, inactive, recently activated, active within a predetermined time, inactive for a period of time, and the like. Also, with respect to device location information, the wireless network supporting the wireless client devices can provide the location coordinates to the gateway server, either periodically or upon request. The location coordinates can then be converted, as appropriate, to different types of location coordinates or information at the gateway server. For example, often wireless networks know the relative location of wireless client devices, and this information can be provided to the gateway server as well as also providing information (in advance or otherwise) so that the gateway server can convert the relative location to an absolute location. As another example, the location information could arrive at the gateway server in a longitude and latitude format, and then rely on the gateway server to convert such a location representation to a street and city or town type of representation. In any case, once the device status and/or device location information has been obtained, the address book and the associated device status and/or device location information are forwarded to the requestor at block 758. Following block 758, the gateway-side address book processing 750 is complete and ends.

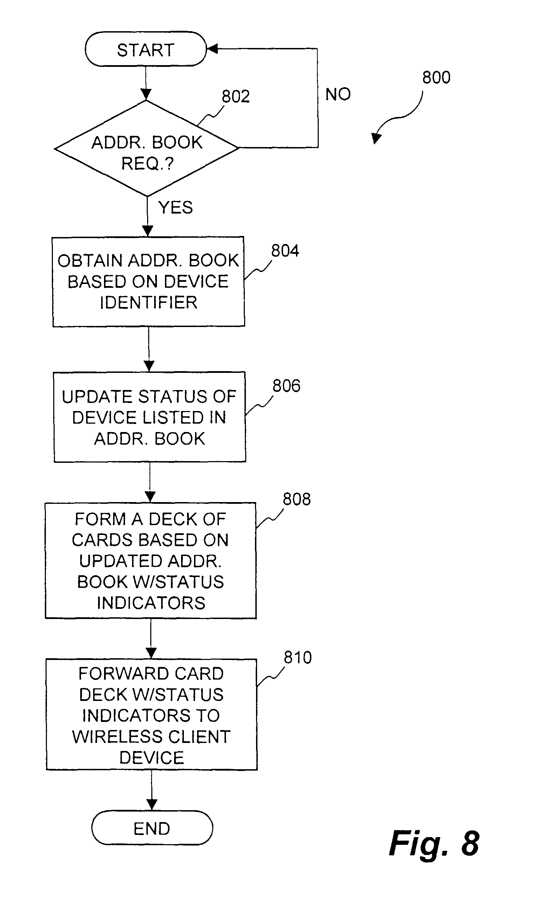

FIG. 8 is a flow diagram of gateway-side address book processing 800 according to another embodiment of the invention. The gateway-side address book processing 800 is, for example, performed by the proxy server device 114 illustrated in FIG. 1.

The gateway-side address book processing 800 begins with a decision block 802 that determines whether an address book request has been received. As long as an address book request has not yet been received, the gateway-side address book processing 800 simply awaits the reception of such a request. Once an address book request has been received, the appropriate address book is obtained from the gateway server based on a device identifier at block 804. Here, the device identifier contained or associated with the address book request is used to identify the appropriate one of a plurality of address books stored within the gateway server. Once identified, the address book is then obtained at block 804.

Next, operational status of devices listed in the address book are updated at block 806. Here, it is assumed that the address book normally maintains operational status information about the devices associated with the individuals or users listed within the address book. In such a case, the operational status of the various devices can be, for example, updated whenever the address book has been requested. This would be an efficient way to update the address book such that it is only updated when it is actually needed. Alternatively, the operational status of the devices listed in the address book could be updated periodically, in which case block 806 may not be required to be performed when actually processing the request for an address book, but would instead be periodically performed. Following block 806, a deck of cards is formed at block 808. The deck of cards is formed from the updated address book having operational status indicators. The deck of cards is, for example, a HDML or WML representation of a series of screens that can be displayed and navigated through by a network browser (e.g., micro browser) on the wireless client device. With respect to FIG. 11, the screen display 1104 represents an address book having four (4) individuals listed together with their operational status information. Following block 808, the deck of cards for the address book is forwarded to the wireless client device that requested the address book at block 810. Following block 810, the gateway-side address book processing 800 is complete and ends.

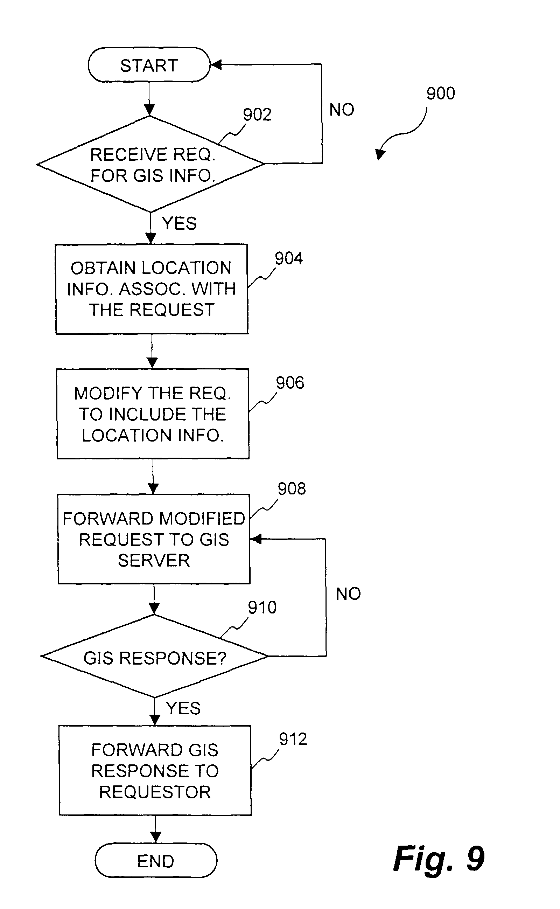

FIG. 9 is a flow diagram of gateway-side Geographic Information System (GIS) request processing 900 according to one embodiment of the invention. The gateway-side GIS request processing 900 is, for example, performed by the proxy server device 114 illustrated in FIG. 1.

The gateway-side GIS request processing 900 begins with a decision block 902. The decision block 902 determines whether a request for GIS information has been received from a wireless client device. The request for GIS information is, for example, a request to access information from the GIS server 150 illustrated in FIG. 1. When a decision block 902 determines that a request for GIS information has not yet been received, the gateway-side GIS request processing 900 awaits such request. On the other hand, once the decision block 902 determines that a request for GIS information has been received, the gateway-side GIS request processing 900 is effectively invoked.

Once invoked, location information associated with the request is obtained at block 904. The location information can be associated with the request in a variety of ways. For example, the location information could correspond to the wireless client device actually making the request for the GIS information (requesting wireless client device). In which case, the request for GIS information would pertain to the location of the wireless client device making the request. The location of the wireless client device could then be determined by a GPS receiver in the wireless client device or by the wireless carrier infrastructure supporting the wireless client device. As another example, the location information could be associated with a certain other wireless client device owned by another individual. In one embodiment, this another individual (and their the wireless client device) could be selected at the requesting wireless client device through use of an address book which would display those individuals within the address book for the user's selection.

Next, the request is modified at block 906 to include the location information. In other words, the incoming request that was received from the wireless client device can be modified at the gateway server such that it includes the appropriate location information that is to be utilized by the GIS server. In certain cases, the modification to the request may also need to perform conversion of the location information between different formats. For example, the location information may be provided by a wireless carrier infrastructure in a relative format and, thus, the relative format may need to be converted to an absolute format for use by the GIS server. Also, the modifying of the incoming request may be performed by actually modify the incoming request for use by the GIS server or by instead generating a new request using the incoming request. In addition to associating the appropriate location information to the incoming request, protocol conversions can also be performed as appropriate.

The modified request is then forwarded to the GIS server at block 908. Then, at block 910, the gateway-side GIS request processing 900 awaits the receipt of a GIS response from the GIS server. Once the decision block 910 determines that a GIS response has been received, the GIS response is forwarded to the requestor (wireless client device) at block 912. The GIS response received from the GIS server may need to be converted into a different protocol for transmission to the requestor, which typically requires traversal through a wireless network. Following block 912, the gateway-side GIS request processing 900 is complete and ends.

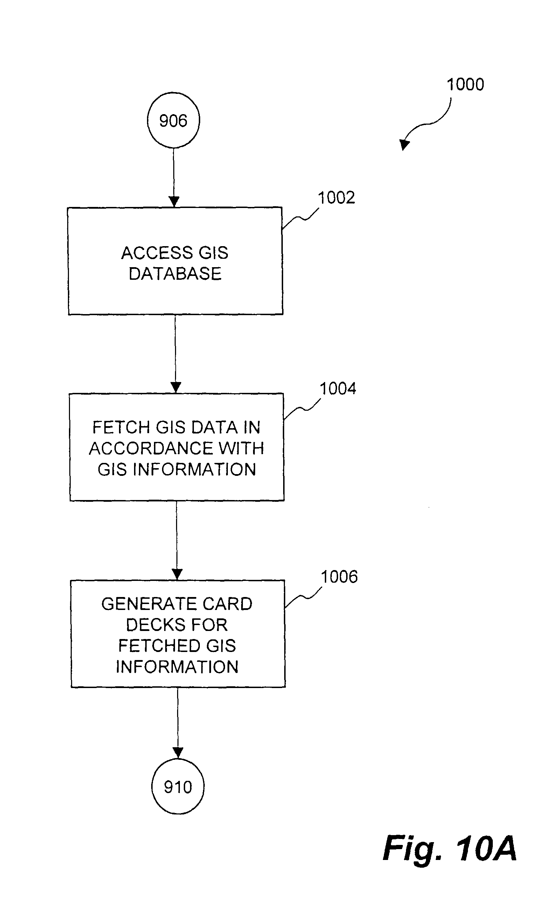

FIG. 10A is a flow diagram of additional GIS request processing 1000 performed at the GIS server according to one embodiment of the invention. The additional GIS request processing 1000 accesses a GIS database associated with the GIS server at block 1002. Then, GIS data is fetched at block 1004 in accordance with the location information associated with the GIS request. Then, GIS decks are generated for the fetched GIS data at block 1006. Following block 1006, the additional GIS request processing returns to block 910 in FIG. 9. In this embodiment, the GIS server is generating the GIS decks that are to be used by the requesting wireless client device. In an alternative embodiment, the GIS decks can instead be generated by a gateway server.

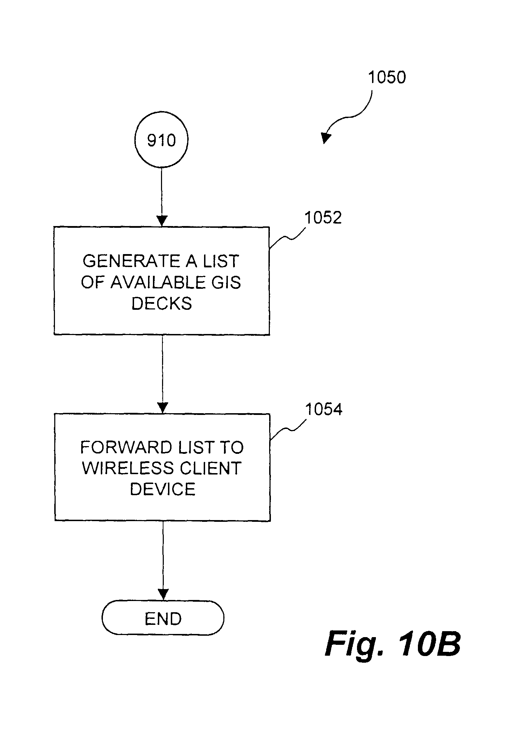

FIG. 10B is a flow diagram of additional gateway processing 1050 according to one embodiment of the invention. The additional gateway processing 1050 represents detailed processing performed in block 912 of FIG. 9. The additional gateway processing 1050 causes the gateway server to generate a list of available GIS decks at block 1052. Here, the gateway server receives the GIS response from the GIS server, which, according to FIG. 10A, can include one or more GIS decks. Here, at block 1052, a list of the available GIS decks is generated. The list can, for example, be an upper card that provides the list (as a menu) and permits selection of one for viewing. Then, at block 1054, the list is forwarded to the wireless client device. Upon receiving the list, the wireless client device displays the list and permits a user of the wireless client device to select one of the available GIS decks for viewing.

As another embodiment of the invention, besides presenting status information to a user of a wireless client device, the user of the wireless device could be notified when the status information for one or more of the monitored wireless client devices changes. In such a case, a gateway server can send the wireless client device a notification of the status change. For example, the notification can be in the form of a beep.

The invention can also be embodied as computer readable code on a computer readable medium. The computer readable medium is any data storage device that can store data, which can thereafter, be read by a computer system. Examples of the computer readable medium include read-only memory, random-access memory, CD-ROMs, magnetic tape, optical data storage devices, carrier waves. The computer readable medium can also be distributed over a network coupled computer systems so that the computer readable code is stored and executed in a distributed fashion.

The advantages of the invention are numerous. Different embodiments or implementations may yield one or more of the following advantages. One potential advantage of the invention is that users can be visually informed of status information pertaining to other wireless communication devices. Another potential advantage of the invention is that users can be visually informed of position or location information pertaining to other wireless communication devices. Still another potential advantage of the invention is that access to a GIS server is facilitated by position or location information (corresponding to a particular wireless communication device) obtained from a wireless carrier infrastructure. Yet another advantage of the invention is that an improved user interface (that provides additional information and functionality) is provided to users of wireless communication devices without imposing hardware or firmware changes to existing wireless communication devices.

The present invention has been described in sufficient detail with a certain degree of particularity. It is understood to those skilled in the art that the present disclosure of embodiments has been made by way of example only and that numerous changes in the arrangement and combination of parts as well as steps may be resorted without departing from the spirit and scope of the invention as claimed. Accordingly, the scope of the present invention is defined by the appended claims rather than the forgoing description of embodiments.

## Claims

1. A wireless two-way interactive communication device comprising:-
a display screen;
a client module including computer program code for causing said display screen to display (i) an identifier for each of at least one other wireless two-way interactive communication device and (ii) a status indicator pertaining to each of the at least one other wireless two-way interactive communication device; and
a processor operatively connected to said display screen, said processor operating to execute said client module.

2. A device as recited in claim 1 wherein the computer program code of said client module includes a network browser application and a markup language instructional source for the network browser application that together cause said display screen to display the identifier and the status indicator.

3. A device as recited in claim 1 or 2 wherein the status indicator indicates whether the corresponding other wireless two-way interactive communication device is active.

4. A device as recited in any preceding claim wherein the identifier for each of the at least one other wireless two-way interactive communication device represents a name of a user of the particular other two-way wireless interactive communication device.

5. A method for operating a portable two-way wireless communication device having a display screen, said method comprising:-
receiving interface information; and
producing a screen display on the display screen in accordance with the interface information, the screen display including an identifier for another portable wireless two-way communication device and a status indicator pertaining to the another portable wireless two-way communication device, the status indicator indicating whether the another portable wireless two-way communication device is active or inactive.

6. A method as recited in claim 5 wherein the identifier is a name representing a user of the another portable wireless two-way communication device, and the status indicator is a symbol.

7. A method as recited in claim 5 or 6 wherein said method receives the interface information and produces the screen display when a user of the portable two-way wireless communication device initiates an address book feature on the portable two-way wireless communication device.

8. A method for operating a portable two-way wireless communication device having a display screen, said method comprising:-
receiving interface information; and
producing a screen display on the display screen in accordance with the interface information, the screen display including an identifier for a particular portable wireless two-way communication device and location information pertaining to the particular portable wireless two-way communication device, the location information indicating a location of the particular portable wireless two-way communication device, and the particular portable wireless two-way communication device being distinct from the portable wireless two-way communication device performing said method.

9. A method as recited in claim 8 wherein the location information of the particular portable wireless two-way communication device is displayed as user readable text or graphics within the screen display.

10. A method as recited in claim 8 or 9 wherein said producing of the screen display on the display screen in accordance with the interface information further displays a status indicator pertaining to the particular portable wireless two-way communication device, the status indicator indicating whether the particular portable wireless two-way communication device is active or inactive.

11. A method as recited in any one of claims 8 to 10 wherein said method further comprises initiating access to a GIS server using the location information.

12. A method as recited in claim 11, wherein the GIS server provides GIS information pertaining to the location information, and
wherein said method further comprises:-
receiving the GIS information provided by the GIS server; and producing another screen display on the display screen in accordance with the GIS information.

13. A user interface provided on a display screen of a portable wireless communication device having an input mechanism, said user interface comprising:-
a list of users from an address book associated with the portable wireless communication device, the users in said list being associated with other portable wireless communication devices; and
a status indication for indicating an operational status of at least one of the other portable wireless communication devices associated with the users in said list;
wherein said list of users and said status indication are displayed on the display screen.

14. A user interface as recited in claim 13 wherein said status indication and said list are simultaneously displayed.

15. A user interface for a portable wireless communication device having a display screen and an input mechanism, said user interface comprising:-
an identifier representing a user associated with another portable wireless communication device;
a button associated with the input mechanism that, upon selection, initiates a request for a location of the another portable wireless communication device associated with the user; and
a location indicator that indicates the location of the another portable wireless communication device associated with the user;
wherein at least said identifier and said location indicator are displayed on the display screen.

16. A user interface as recited in claim 15 wherein said user interface further comprises:-
a button that, upon selection, initiates access to a GIS server using the location.

17. In a server computer coupled to a network of computers, a method for processing a Geographic Information System (GIS) request for spatially related data from a GIS server coupled to the network of computers, said method comprising:-
receiving, at the server computer, a wireless device's request for access to a GIS server to obtain spatial data;
obtaining, at the server computer, a location of interest that is associated with the wireless device's request for access to the GIS server;
producing, at the server computer, a GIS server request based on the wireless device's request and the location obtained; and
forwarding the GIS server request to the GIS server.

18. A method as recited in claim 17 wherein the location of interest that is associated with the wireless device's request is obtained from a wireless carrier infrastructure.

19. A method as recited in claim 17 or 18 wherein said producing of the GIS server request comprises:
converting the location of interest into a format suitable for the GIS server; and
modifying the wireless device's request to include the converted location of interest and to otherwise be in a format suitable for use by the GIS server.

20. A computer readable medium including computer program code for operating a portable two-way wireless communication device having a display screen, said computer readable medium comprising:-
computer program code for receiving interface information; and
computer program code for producing a screen display on the display screen in accordance with the interface information, the screen display including an identifier for another portable wireless two-way communication device and a status indicator pertaining to the another portable wireless two-way communication device, the status indicator indicating whether the another portable wireless two-way communication device is active or inactive.

21. A computer readable medium for operating a portable two-way wireless communication device having a display screen, said computer readable medium comprising:-
computer program code for receiving interface information; and
computer program code for producing a screen display on the display screen in accordance with the interface information, the screen display including an identifier for a particular portable wireless two-way communication device and location information pertaining to the particular portable wireless two-way communication device, the location information indicating a location of the particular portable wireless two-way communication device, and the particular portable wireless two-way communication device being distinct from the portable wireless two-way communication device performing said method.

22. A wireless communication system comprising:-
a plurality of information server computers coupled by a wired network;
a plurality of wireless mobile devices that communicate using a wireless network, each of said wireless mobile devices including a network browser, a display and a processor; and
a server that couples said wireless mobile devices to said information server computers through the wireless network and the wired network;
wherein when a particular one of the network browsers desires to access a resource from one of the information server computers of said wired network, a resource request is sent to said server by the particular network browser, said proxy server then determines whether the resource request is to one of said information server computers that provides spatial-related information, and if so, said server determines an appropriate location of interest and produces a revised resource request using the received resource request and the appropriate location.

23. A method for providing information for a plurality of phone number identifiers on a display screen of a wireless client device, said method comprising:-
requesting an address book containing the plurality of phone number identifiers corresponding to a user identifier associated with the wireless client device;
receiving a markup language file corresponding to the address book associated with the wireless client device;
caching the received markup language file in a memory of the wireless client device; and
displaying the plurality of phone number identifiers of the address book on the display screen together with activation status for the phone number identifiers and using the received markup language file.

24. A method as recited in claim 23 wherein said displaying further displays position information for the individual phone number identifiers.
